# FASCICULE DE BREVET EUROPEEN

(11) **EP 2 605 921 B1**
(45) Date de publication et mention de la délivrance du brevet: **05.11.2014**
(21) Numéro de dépôt: 11758506.7
(22) Date de dépôt: 16.08.2011
(51) Int. Cl.: B60B 3/14, B60B 3/16, B60B 7/04, B60B 7/06, B60B 7/08, B60B 7/14, F16B 31/04, F16B 37/14, F16B 39/10

(54) **DISPOSITIF DE SÉCURITÉ POUR UNE ROUE D'UN VÉHICULE**
SICHERUNGSVORRICHTUNG FÜR EIN FAHRZEUGRAD
SAFETY DEVICE FOR A VEHICLE WHEEL

(30) Priorité: 18.08.2010 FR 1056649
(43) Date de publication de la demande: 26.06.2013
(73) Titulaire: De Lima, Bernard, 33600 Pessac (FR)
(72) Inventeur: De Lima, Bernard, 33600 Pessac (FR)
(74) Mandataire: Fantin, Laurent
(86) Numéro de dépôt international: PCT/FR2011/051916
(87) Numéro de publication internationale: WO 2012/022911

(56) Documents cités:
- EP-A1- 1 538 351
- EP-A2- 0 865 940
- WO-A1-2005/037571
- AT-B- 397 789
- GB-A- 2 325 504
- GB-A- 2 394 263

## Description

La présente invention est relative à un dispositif de sécurité pour une roue d'un véhicule, notamment d'un véhicule de transport routier, ledit dispositif permettant d'empêcher la désolidarisation des éléments de fixation de ladite roue au moyeu.

Dans le secteur du transport routier, les roues sont des organes mécaniques particulièrement surveillés.

Par exemple, il est important de surveiller fréquemment l'usure et la pression de gonflage des pneus pour assurer la sécurité du transport.

Aussi, les vis ou les écrous de fixation des roues, et plus exactement leur couple de serrage, doivent aussi être contrôlés régulièrement.

En effet, en raison des vibrations engendrées par des irrégularités du revêtement de la chaussée et par des chocs dus à des imperfections plus importantes dudit revêtement, lesdits éléments de fixation tendent à se desserrer, ce qui peut amener à une désolidarisation complète de la roue par rapport au moyeu.

La désolidarisation d'une roue est dangereuse, non seulement pour le conducteur du véhicule de transport, mais aussi pour ceux des véhicules situés à proximité. Et, si tous les conducteurs sont sains et saufs après la désolidarisation d'une roue, ce sont les véhicules qui sont endommagés et plus particulièrement le véhicule de transport et son chargement.

Aussi, il a été constaté que, dans le cas d'un véhicule de transport routier, les conséquences matérielles de la désolidarisation d'une roue sont rarement négligeables.

D'autre part, étant donné le nombre de roues montées sur les essieux d'un tracteur routier et de sa remorque, le contrôle du couple de serrage de chacun des éléments de fixation peut s'avérer long et fastidieux pour le conducteur.

De plus, en regard des nombreux kilomètres parcourus par les véhicules de transport routier, le couple de serrage des éléments de fixation doit être contrôlé régulièrement.

Cependant, ledit contrôle n'est généralement pas effectué aussi fréquemment que nécessaire, et, pensant remédier de manière efficace au problème, certains dépassent généreusement le couple de serrage préconisé au risque d'endommager les filets des éléments de fixation voire de conduire à la rupture des goujons. Plusieurs dispositifs de l'art antérieur ont été développés afin de limiter ou d'éviter la désolidarisation d'une roue d'un véhicule.

On connaît ainsi le brevet français, de même déposant et publié sous le numéro FR-2897014, relatif à un dispositif de sécurité pour une roue de véhicule, ladite roue comprenant une jante fixée au moyeu dudit véhicule par des éléments de fixation et équipée d'un enjoliveur.

Ledit dispositif comprend des moyens anti-rotation prenant notamment la forme de capuchons et prévus pour coopérer avec les éléments de fixation de la jante sur le moyeu et intégrés audit enjoliveur.

Un premier inconvénient de ce premier dispositif vient de la nécessité d'aligner à l'aveugle et un à un les capuchons pour qu'ils coopèrent avec les éléments de fixation lors de la mise en place de l'enjoliveur sur la roue, ledit enjoliveur venant cacher la jante et lesdits éléments de fixation.

La mise en place de ce premier dispositif peut s'avérer longue et compliquée lorsque chaque roue du véhicule est reliée à un moyeu par une dizaine d'éléments de fixation.

De plus, l'intégration des moyens anti-rotation selon ce premier dispositif prévoyant un montage libre en rotation des capuchons portés par l'enjoliveur, les usinages et les ajustements nécessaires audit montage des capuchons augmentent considérablement le coût de fabrication de ce premier dispositif. Afin d'éviter les difficultés de montage et de réduire le coût de fabrication, un deuxième dispositif, présenté dans la demande de brevet EP-A-1538351 et qui comporte les caractéristiques du préambule de la revendication 1, prévoit un agencement dans lequel les moyens anti-rotation prennent la forme d'éléments séparés : des premiers éléments coopérant chacun avec une des vis de fixation et comprenant chacun une extension latérale, et un deuxième élément assimilable à un couvercle et comprenant au moins une paroi latérale extérieure sur laquelle viennent buter les extensions desdits premiers éléments pour stopper la rotation, et donc le dévissage, des vis de fixation.

Ce deuxième dispositif de l'art antérieur est plus aisé et plus rapide à mettre en oeuvre que le premier, notamment si de nombreuses roues doivent être équipées. Toutefois, dans ce deuxième dispositif, le deuxième élément assurant le maintien des moyens anti-rotation sur la roue est fixé par clipsage à la jante.

Au final, le niveau de sécurité apporté par ce deuxième dispositif est encore trop limité.

Aussi, la présente invention vise à résoudre les problèmes de l'art antérieur en proposant un dispositif de sécurité pour une roue d'un véhicule, ledit dispositif comprenant des moyens de blocage en rotation des éléments de fixation simples et rapides à monter sur ladite roue et permettant de garantir une sécurité intégrale grâce à un verrouillage de la solidarisation dudit dispositif sur la roue. A cet effet, l'invention a pour objet un dispositif de sécurité pour une roue d'un véhicule, notamment d'un véhicule de transport routier, ledit dispositif venant sécuriser les éléments de fixation de la jante de ladite roue sur un moyeu, ledit dispositif comprenant au moins des moyens de blocage en rotation desdits éléments de fixation et des moyens de maintien desdits moyens de blocage sur les éléments de fixation, lesdits moyens de blocage en rotation étant constitués de pièces femelle et d'au moins une paroi périphérique contre laquelle lesdites pièces butent en rotation, au moins une partie des éléments de fixation recevant au moins une pièce femelle, les moyens de maintien comprenant au moins une paroi supérieure recouvrant les éléments de fixation équipés des pièces femelle, et ladite paroi supérieure bloquant, directement ou par l'intermédiaire d'une autre pièce, la translation desdites pièces femelle le long des éléments de fixation, ledit dispositif étant caractérisé en ce qu'il comprend des moyens de solidarisation à la roue et en ce que ladite solidarisation est verrouillée mécaniquement.

D'autres caractéristiques et avantages ressortiront de la description qui va suivre de l'invention, description donnée à titre d'exemple uniquement, en regard des dessins annexés sur lesquels :
- la figure 1 représente une vue en éclaté d'un dispositif de sécurité dans un premier mode de réalisation selon l'invention,
- la figure 2 représente une vue en éclaté d'un dispositif de sécurité dans un deuxième mode de réalisation selon l'invention,
- les figures 3A à 3D représentent différentes variantes des moyens de blocage selon l'invention,
- la figure 4 représente en coupe une première variante des moyens de blocage dans un premier mode de réalisation d'un dispositif de sécurité selon l'invention,
- la figure 5 représente en coupe une deuxième variante des moyens de blocage dans un premier mode de réalisation d'un dispositif de sécurité selon l'invention,
- la figure 6 représente en coupe des moyens de blocage dans un deuxième mode de réalisation d'un dispositif de sécurité selon l'invention,
- la figure 7 représente en coupe une première variante des moyens de verrouillage sur une roue d'un dispositif de sécurité selon l'invention,
- la figure 8 représente en perspective un capuchon d'un dispositif de sécurité selon l'invention,
- la figure 9 représente en détails une première variante des moyens de verrouillage sur une roue d'un dispositif de sécurité selon l'invention,
- la figure 10 représente un synoptique du montage sur une roue d'un dispositif de sécurité selon l'invention.

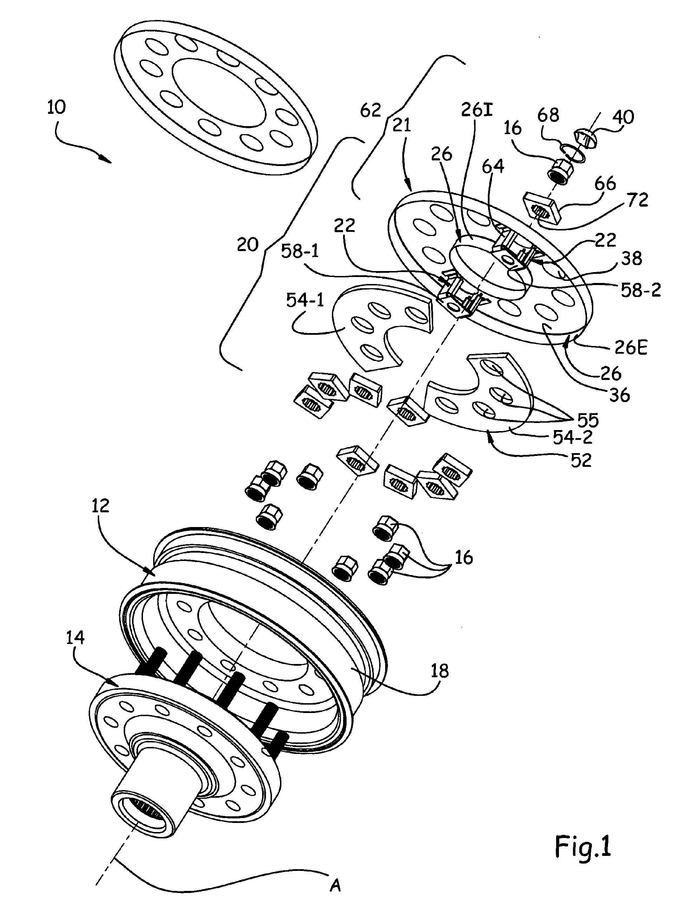

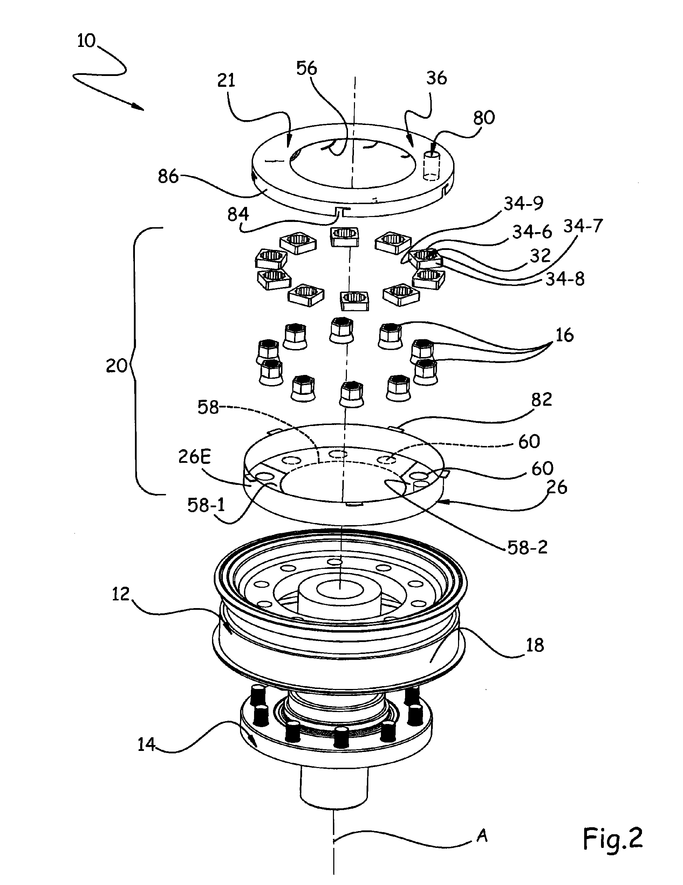

Les figures 1 et 2 illustrent des vues en éclaté dans deux modes de réalisation d'un dispositif de sécurité 10 selon l'invention, ledit dispositif venant équiper une roue 12 montée sur un moyeu 14.

La présente invention vise particulièrement la sécurisation des roues des véhicules de transport routier, mais cette application n'est nullement limitative et ledit dispositif de sécurité peut facilement être adapté pour équiper les roues de tous types de véhicule.

Plus précisément, ledit dispositif 10 vient sécuriser les éléments de fixation 16 de la jante 18 de ladite roue 12 sur le moyeu 14, lesdits éléments de fixation 16 étant répartis circulairement autour de l'axe A traversant centralement l'assemblage entre le moyeu, la roue et le dispositif de sécurité. Indifféremment, que les éléments de fixation 16 soient des écrous ou des vis, le dispositif de sécurité selon l'invention peut venir sécuriser lesdits éléments 16. A cet effet, ledit dispositif 10 comprend des moyens de blocage en rotation 20 desdits éléments de fixation 16, des moyens de maintien 21 desdits moyens de blocage 20 sur les éléments de fixation 16, et des moyens de solidarisation 22 à la roue.

Selon une caractéristique importante de l'invention, détaillée ultérieurement, ladite solidarisation réalisée par les moyens 22 est verrouillée mécaniquement. Lesdits moyens de blocage en rotation 20 sont constitués de pièces femelle 24 et d'au moins une paroi périphérique 26 contre laquelle lesdites pièces 24 viennent buter en rotation, au moins une partie des éléments de fixation 16 recevant au moins une pièce femelle 24.

Comme illustré sur les différentes variantes des moyens de blocage 20 des figures 1, 2 et 3A à 3D, chaque pièce femelle 24 est de profil extérieur 28 non-circulaire de façon que la rotation de ladite pièce 24 soit arrêtée en au moins un point 30 par au moins une paroi périphérique 26 située à proximité de chacun desdits éléments de fixation 16.

Toujours selon l'invention, chaque pièce 24 comprend au moins un logement 32, ouvert ou fermé, coopérant avec au moins une partie des faces extérieures 34, notamment par l'intermédiaire desquelles est appliqué le couple de serrage, d'au moins un élément de fixation 16.

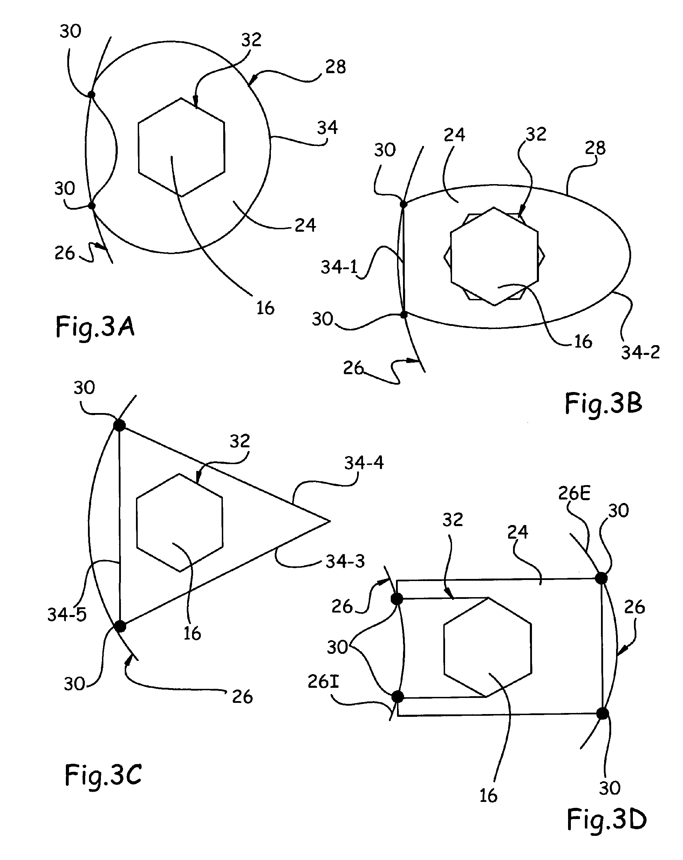

Comme illustré par la figure 3A, une pièce 24 peut comprendre une face latérale extérieure 34 curviligne suivant par exemple un profil 28 oblong incurvé, et un logement 32 hexagonal fermé correspondant aux six pans d'un écrou ou d'une tête de vis formant l'élément de fixation 16.

Ensuite, comme illustré en figure 3B, une pièce 24 peut aussi comprendre plusieurs faces latérales extérieures (34-1,34-2) courbe et/ou droite suivant un profil 28 comprenant des portions curviligne et/ou rectiligne, et le logement 32 peut être multi-pans de façon à faciliter le positionnement de la pièce 24 autour de l'élément de fixation 16 et par rapport à une surface périphérique 26.

Puis, comme illustré en figure 3C, une pièce 24 selon l'invention peut aussi être polygonale, c'est à dire comprenant au moins trois faces latérales extérieures (34-3,34-4,34-5) droites suivant un profil 28 triangulaire.

Enfin, et comme illustré en figure 3D, une pièce 24 peut être polygonale et comprendre un logement 32 ouvert coopérant en partie avec les six pans d'un écrou ou d'une tête de vis formant l'élément de fixation 16.

Bien entendu, les quatre variantes présentées sur les figures 3A à 3D ne sont pas limitatives, et l'invention couvre aussi un dispositif de sécurité dont les moyens de blocage comprennent des pièces femelle imaginées à partir desdites variantes présentées ci-dessus.

Comme illustré sur les figures 1, 2 et 3A à 3D, et quelle que soit la variante de réalisation d'une pièce femelle 24 selon l'invention, ladite pièce 24 est arrêtée en au moins un point 30 par au moins une paroi périphérique intérieure 26I et/ou extérieure 26E respectivement entourée par et/ou entourant l'ensemble des éléments de fixation 16 équipés des pièces femelle 24.

L'invention couvre bien entendu toutes les variantes de réalisation dans lesquelles les moyens de blocage 20 du dispositif 10 comprennent une des deux ou les deux parois périphériques (26I,26E).

De préférence, et comme illustré sur les figures 1 et 2, chaque pièce femelle 24 des moyens de blocage en rotation 20 est polygonale, de profil extérieur 28 carré, et comprend quatre faces latérales extérieures (34-6,34-7,34-8,34-9) droites ainsi qu'un logement 32 fermé et multi-pans, possédant notamment 24 pans.

Et, toujours de préférence, lesdites parois périphériques intérieure 26I et extérieure 26E sont sensiblement cylindriques autour de l'axe central A, et, lorsque le dispositif 10 comprend les deux parois intérieure 26I et extérieure 26E, celles-ci sont concentriques de part et d'autre du cercle sur lequel sont répartis les éléments de fixation 16.

Ensuite, le dispositif de sécurité 10 comprend des moyens de maintien en position 21 desdits moyens de blocage 20 sur les éléments de fixation 16.

Ces moyens de maintien 21 comprennent au moins une paroi supérieure 36 recouvrant les éléments de fixation 16 équipés des pièces femelle 24 de manière à empêcher l'échappement par translation desdites pièces femelle 24.

Ainsi, ladite paroi supérieure 36 est susceptible de bloquer, directement ou par l'intermédiaire d'une autre pièce, la translation desdites pièces femelle 24 le long des éléments de fixation 16.

De préférence, ladite paroi supérieure 36 prend sensiblement la forme d'une couronne reliant les parois périphériques intérieure 26I et extérieure 26E et ladite couronne se situe dans un plan perpendiculaire à l'axe central A.

Ladite paroi supérieure 36 constitue donc la face la plus visible du dispositif de sécurité 10 et elle peut être décorée, peinte, etc, de façon que ledit dispositif 10 joue le rôle d'enjoliveur de roue.

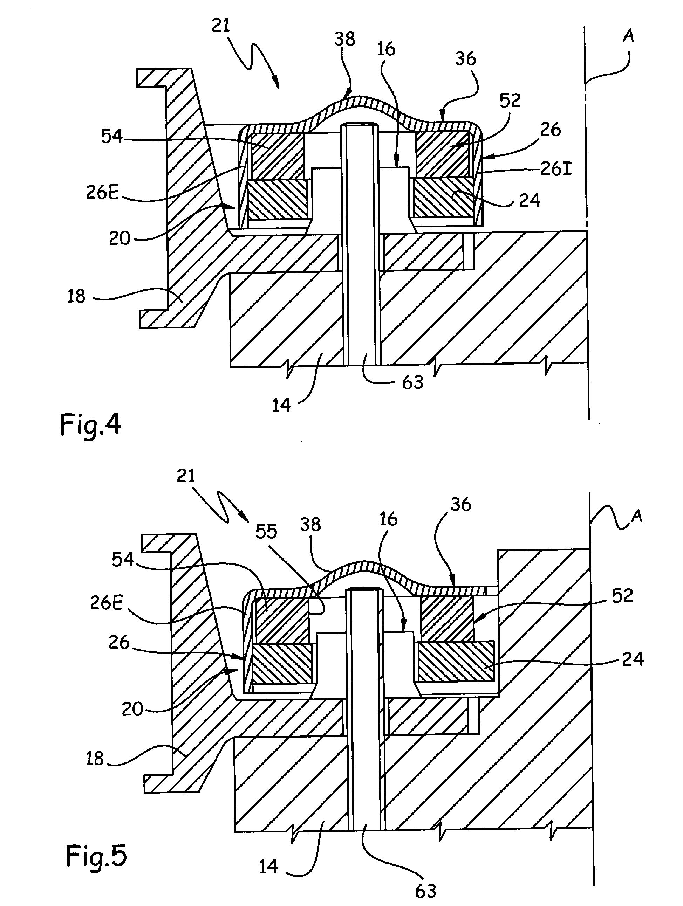

Selon une première variante illustrée en perspective en figure 1 et en coupe sur les figures 4 et 5, ladite paroi supérieure 36 peut comporter des bossages 38 au-dessus de chaque élément de fixation 16, lesdits bossages venant de fabrication avec ladite paroi et permettant de conserver un dispositif de sécurité 10 compact et utilisable avec des éléments de fixation plus hauts.

Aussi, tout en améliorant l'adaptabilité du dispositif 10, lesdits bossages 38 peuvent conférer un aspect plus esthétique au dispositif de sécurité.

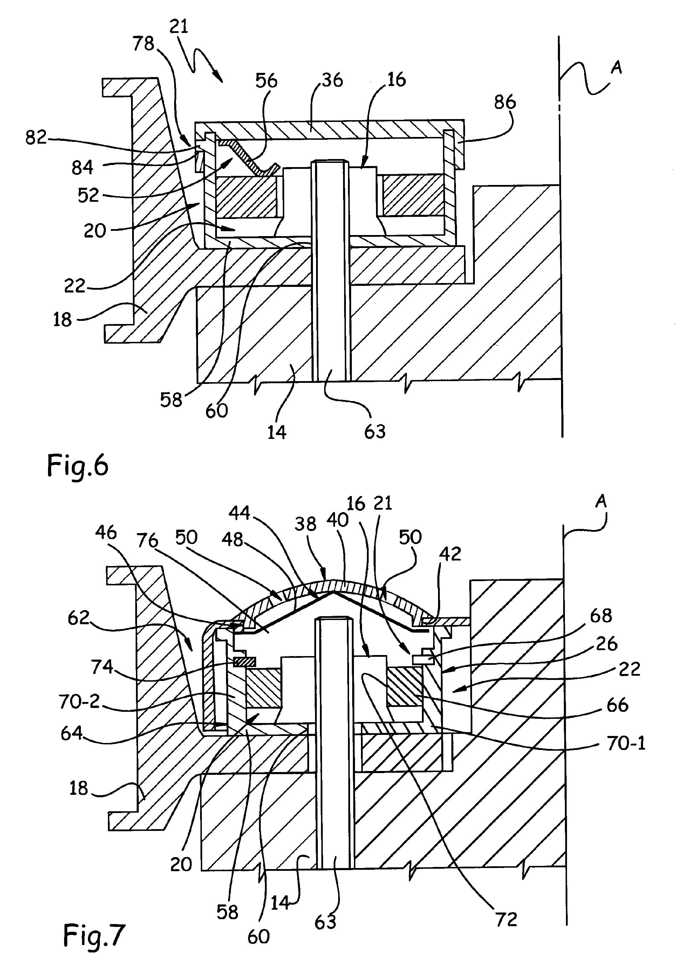

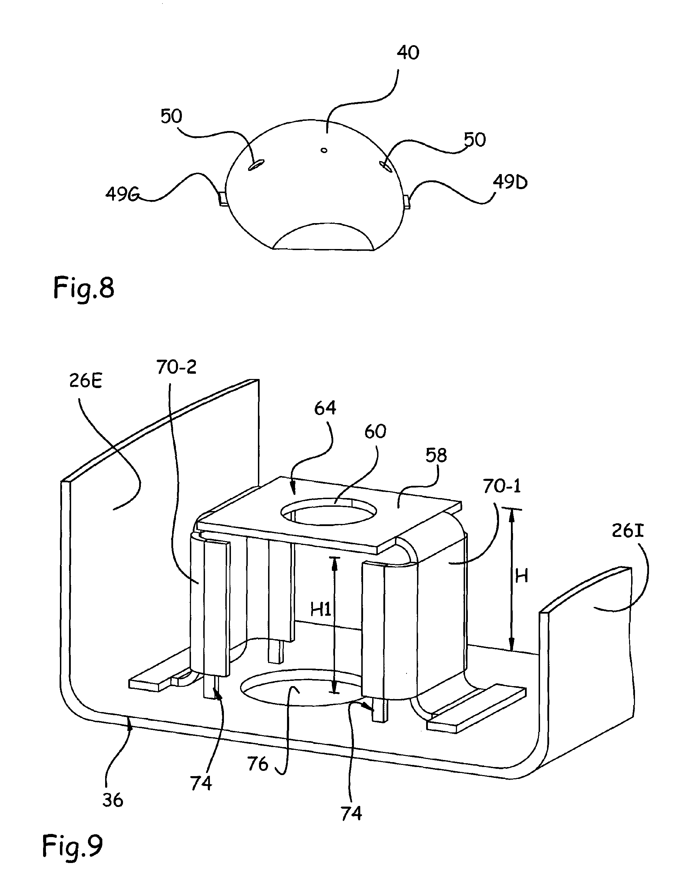

Selon une deuxième variante illustrée en coupe en figure 7 et en perspective en figure 8, un bossage 38 peut aussi prendre la forme d'un capuchon 40 de profil bombé et détachable de ladite paroi supérieure 36.

Ledit capuchon 40 vient se loger dans une ouverture 42 réalisée dans ladite paroi 36, et des moyens de positionnement et de retenue 44 dudit capuchon au niveau de ladite ouverture 42.

Lesdits moyens de positionnement et de retenue peuvent comprendre un épaulement 46, porté par le capuchon 40 comme illustré en figure 7 ou réalisé dans la paroi 36 au droit de l'ouverture 42, et une lame élastique 48 pliée et fixée sous ledit capuchon et dont les extrémités (49G,49D) viennent se glisser sous ladite paroi 36, de petits orifices 50 étant prévus dans ledit capuchon 40 pour pouvoir comprimer ladite lame lors du montage du capuchon.

Ledit capuchon détachable 40 autorise une optimisation du dispositif de sécurité 10 consistant à réaliser au moins un capuchon dans un matériau thermofusible ou à peindre au moins un capuchon avec une peinture susceptible de changer de couleur au-delà d'une certaine température, ceci de manière à détecter rapidement toute élévation anormale de température du moyeu et de sa roue, ladite détection étant particulièrement importante dans le cas du transport de matières dangereuses ou inflammables.

Par la suite, le dispositif 10 selon l'invention peut comprendre des moyens d'amortissement 52 associés aux moyens de maintien 21 et intercalés entre la paroi supérieure 36 desdits moyens 21 et les pièces femelle 24 équipant les élément de fixation 16.

Lesdits moyens d'amortissement 52 sont susceptibles d'être comprimés de façon à sensiblement immobiliser les pièces femelle 24 en translation et à limiter le bruit, tel un cliquetis, et les effets, telle l'usure, dus aux vibrations desdites pièces 24 contre les éléments de fixation 16 et la ou les parois périphérique (26I,26E).

Selon une première variante, illustrée sur les figures 1, 4 et 5, lesdits moyens d'amortissement 52 prennent la forme d'au moins une pièce 54 en matériau souple, et de préférence de deux demi pièces (54-1,54-2), comprimée entre la paroi supérieure 36 et chaque pièce femelle 24.

De préférence, le matériau souple de réalisation de chaque pièce 54 est un élastomère synthétique résistant aux hydrocarbures, au sel et à base de polychloroprène, tel le Néoprène®.

Avantageusement, chaque pièce (54,54-1,54-2) peut comprendre des ouvertures 55 au droit de chaque élément de fixation 16 équipé d'une pièce femelle 24, lesdites ouvertures autorisant le passage desdits éléments 16 et permettant à la pièce en matériau souple de mieux reposer sur les pièces femelle 24.

Selon une deuxième variante, illustrée sur les figures 2 et 6, lesdits moyens d'amortissement 52 comprennent au moins une lame ressort 56 fixée sous la paroi supérieure 36 et appuyant sur chaque pièce femelle 24 des moyens de blocage 20.

De préférence, chaque lame ressort 56 est réalisée dans un métal ou un alliage métallique élastique et rapportée par soudage sous la paroi supérieure 36.

Puis, comme illustré par les figures 1, 2, 6 et 7, le dispositif de sécurité 10 selon l'invention comprend des moyens de solidarisation 22 à la roue 12 et au moyeu 14. Plus en détails, de manière à former au moins un point de fixation, lesdits moyens de solidarisation 22 comprennent au moins une paroi inférieure 58 maintenue contre la jante 18 par au moins un élément de fixation 16, ladite paroi inférieure 58 étant intercalée entre ledit élément 16 et la jante 18.

A cet effet, ladite paroi inférieure 58 est munie d'un alésage 60 ajusté, au jeu près, au diamètre de l'axe fileté 63 dudit élément de fixation 16, vis ou écrou.

De préférence pour un meilleur positionnement et un meilleur maintien du dispositif 10, et comme illustré sur les figures 1 et 2, les moyens de solidarisation 22 comprennent au moins deux parois inférieures (58-1,58-2) chacune maintenue contre la jante 18 par au moins un élément de fixation 16, lesdites parois inférieures (58-1,58-2) étant diamétralement opposées par rapport à l'axe central A.

Selon une variante, et notamment comme illustré en pointillé sur la figure 2, une même paroi inférieure 58 du dispositif 10 peut comprendre plus de deux alésages 60 pour la réalisation de plusieurs points de fixation.

Enfin, selon d'autres variantes, une paroi inférieure 58 unique et en forme de couronne comme la paroi supérieure 36 peut compter autant d'alésages 60 que d'éléments de fixation 16, et, éventuellement, le diamètre de certains alésages 60 peut être agrandi de manière à éviter le démontage et le remontage de certains éléments de fixation 16 de la roue 12 lors de la mise en place du dispositif 10 sur la roue 12.

Selon une caractéristique importante de l'invention vis-à-vis des dispositifs de l'art antérieur, la solidarisation ainsi réalisée du dispositif de sécurité 10 à la roue 12 et au moyeu 14 est verrouillée mécaniquement.

A cet effet, ledit dispositif de sécurité 10 comprend des moyens de verrouillage 62 mécaniques assurant le blocage en rotation et en translation de chaque élément de fixation 16 utilisé pour la réalisation des moyens de solidarisation 22 et assurant le maintien de chaque surface inférieure (58,58-1,58-2) contre la jante 18.

Aussi, dans un premier mode de réalisation du dispositif de sécurité 10 selon l'invention, illustré sur les figures 1, 7 et 9, la paroi supérieure 36 et la ou les parois périphériques (26,26I,26E) faisant partie d'une même pièce, et chaque paroi inférieure (58,58-1,58-2) étant rapportée sous ladite paroi supérieure 36 par l'intermédiaire d'un support 64 de hauteur H adaptée, lesdits moyens de verrouillage 62 consistent en une pièce femelle 66 venant se loger autour de chaque élément de fixation 16 utilisé pour la réalisation des moyens de solidarisation 22 et bloquée en rotation dans ledit support 64, et en un anneau élastique 68, du type circlips, monté dans ledit support 64 et venant bloquer en translation ladite pièce femelle 66.

Plus en détails, chaque support 64 comporte au moins deux parois latérales (70-1,70-2) supportant ladite paroi inférieure (58,58-1,58-2) de part et d'autre de celle-ci et solidarisées, de préférence par soudage, à la paroi supérieure 36. Similairement aux moyens de blocage 20, chaque pièce femelle 66 est de profil extérieur non-circulaire de façon que la rotation de ladite pièce 66 soit arrêtée en au moins un point par au moins une paroi latérale (70-1,70-2) située à proximité.

De plus, chaque pièce 66 comprend au moins un logement 72, ouvert ou fermé, coopérant avec au moins une partie des faces extérieures 34 de l'élément de fixation 16.

Enfin, lesdites parois latérales (70-1,70-2) comprennent une gorge intérieure 74 permettant de recevoir l'anneau élastique 68 et située à une hauteur H1 adaptée pour placer ledit anneau juste au-dessus de la pièce femelle 66.

Bien entendu, afin de permettre le montage successivement de l'élément de fixation 16, de la pièce femelle 66 et de l'anneau élastique 68, ladite paroi supérieure 36 comprend une ouverture 76 de dimensions adaptées pour le passage desdits éléments à monter située dans l'alignement de chaque support 64, ladite ouverture 76 pouvant être obturée par un capuchon détachable 40 tel que décrit précédemment.

Optionnellement, et dans un objectif de sécurisation de la roue 12 contre le vol, chaque capuchon 40 obturant une ouverture 76 des moyens de verrouillage 62 peut être équipé de moyens antivol nécessitant une clé ou un moyen analogue pour retirer ledit capuchon.

Toujours dans ce premier mode de réalisation du dispositif 10, et de préférence, les moyens de solidarisation 22 comprenant au moins deux parois inférieures (58-1,58-2) diamétralement opposées, au moins deux supports 64 sont rapportés sous la paroi supérieure 36, et chaque support 64 reçoit une pièce femelle 66 et un anneau élastique 68 bloquant en rotation et en translation l'élément de fixation 16 assurant le maintien de l'une des parois inférieures (58-1,58-2).

De préférence, dans ce premier mode de réalisation du dispositif 10, au moins deux éléments de fixation 16 de la roue sont utilisés pour la réalisation des moyens de solidarisation 22, permettent de maintenir les parois inférieures (58-1,58-2) contre la jante 18, et reçoivent les moyens de verrouillage 62, tandis que les autres éléments de fixation 16 reçoivent uniquement les moyens de blocage 20 décrits précédemment.

Dans un deuxième mode de réalisation du dispositif de sécurité 10 selon l'invention, illustré sur les figures 2 et 6, la ou les parois inférieure (58,58-1,58-2) et la ou les parois périphériques (26,26I,26E) faisant partie d'une même pièce, et la paroi supérieure 36 étant rapportée sur la ou les parois périphériques (26,26I,26E) par des moyens d'emboîtement 78, lesdits moyens de verrouillage 62 consistent en un dispositif de verrouillage 80 solidarisant ou désolidarisant ladite paroi supérieure 36 à ou aux parois inférieures (58,58-1,58-2) et/ou à ou aux parois périphériques (26,26I,26E).

Ledit dispositif de verrouillage 80 est actionné par une clé au tout autre moyen analogue, permettant ainsi d'assurer simultanément une fonction d'antivol de la roue 12.

Lesdits moyens d'emboîtement 78 prennent par exemple la forme de languettes 82 solidaires d'au moins une paroi périphérique (26,26I,26E) et s'étendant radialement par rapport à celle-ci, et d'encoches 84 de réception desdites languettes, lesdites encoches étant réalisées dans un rebord 86 de la paroi supérieure 36.

Dans ce deuxième mode de réalisation, et de préférence, tous les éléments de fixation 16 de la roue reçoivent les moyens de blocage 20 décrits précédemment, au moins deux éléments de fixation 16 participent à la réalisation des moyens de solidarisation 22 du dispositif 10 à la roue 12 et au moyeu 14, et l'ensemble des éléments de fixation 16 équipés des moyens de blocage 20 sont verrouillés par l'intermédiaire de la paroi supérieure 36 et du dispositif 80.

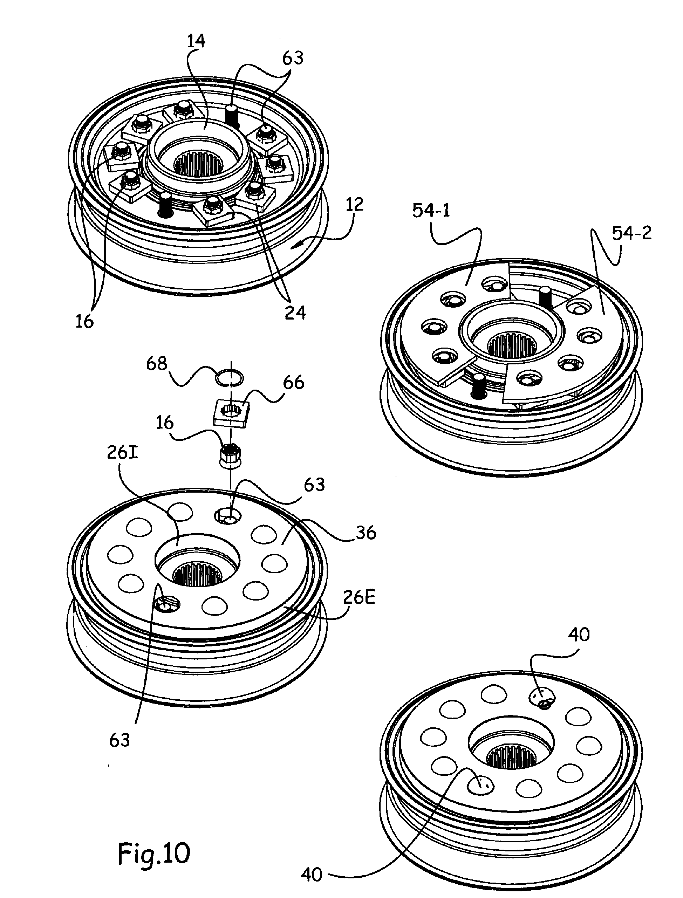

La mise en place du dispositif de sécurité 10 dans son premier mode de réalisation est maintenant détaillée en regard de la figure 10 représentant sous forme d'un synoptique différentes étapes de ladite mise en place.

Ainsi, dans une première étape, après mise en place de la roue 12 sur le moyeu 14, et notamment en positionnant la jante 18 sur les axes filetés 63 des éléments de fixation 16, tous les éléments de fixation 16 sauf deux diamétralement opposés sont mis en place sur lesdits axes 63 et serrés au couple adéquat. Ensuite, les pièces femelle 24 des moyens de blocage 20 sont disposées sur chaque élément de fixation 16 déjà en place.

Puis, dans une deuxième étape, les moyens d'amortissement 52, prenant ici la forme de deux demi-pièces (54-1,54-2) en matériau souple, sont mis en place sur les éléments de fixation 16 équipés de pièces femelle 24.

Puis, dans une troisième étape, la paroi supérieure 36 solidaire de parois périphériques intérieure 26I et extérieure 26E est posée au-dessus des moyens de blocage 20 et des moyens d'amortissement 52, deux supports 64 diamétralement opposés des moyens de verrouillage 22 et reliés à la paroi supérieure 36 étant positionnés sur les deux axes filetés 63 encore libres. Ensuite, une fois positionné dans les supports 64, chaque axe fileté 63 libre reçoit un élément de fixation 16 effectuant la solidarisation du dispositif 10 à la roue 12, suivi de la pièce femelle 66 et de l'anneau élastique 68 des moyens de verrouillage 62 de ladite solidarisation.

Enfin, dans une quatrième et dernière étape, un capuchon 40 vient obturer chaque ouverture 76 réalisée dans la paroi supérieure 36 pour les besoins de l'assemblage des moyens de verrouillage 62. Chaque capuchon 40 peut, suivant les besoins, être partiellement tronqué, comme représenté sur la figure 8.

Aussi, on constate que la mise en place du dispositif de sécurité 10 selon l'invention est particulièrement simple et rapide en comparaison des dispositifs de l'art antérieur, notamment grâce à la conception en éléments séparés des moyens de blocage : les pièces femelle sont montées en toute visibilité, ce qui permet de facilement les positionner par rapport à la ou aux parois périphériques destinées à les bloquer en rotation.

Enfin, dans l'un ou l'autre des modes de réalisation présentés, les moyens de verrouillage garantissent le maintien du dispositif de sécurité sur la roue, et donc la fonction anti-rotation réalisée par les moyens de blocage. Avantageusement, grâce à la fiabilité de la fonction anti-rotation, le dispositif de sécurité selon l'invention peut même permettre de strictement respecter le couple de serrage des éléments de fixation 16 à des valeurs actuellement préconisées pour les véhicules de transport routier, sans avoir besoin de les dépasser en voulant être sécuritaire, ce qui a l'effet inverse comme explicité en préambule.

La présente invention a été axée sur une description concernant les véhicules routiers mais l'application aux véhicules de chantier est également très importante et s'effectue de façon strictement identique, avec les mêmes moyens.

On comprend que cette application concerne de très nombreux véhicules et le danger d'une roue perdue sur chantier peut conduire à également à des catastrophes.

## Revendications

1. Dispositif de sécurité (10) pour une roue (12) d'un véhicule, notamment d'un véhicule de transport routier, ledit dispositif (10) venant sécuriser les éléments de fixation (16) de la jante (18) de ladite roue (12) sur un moyeu (14), ledit dispositif (10) comprenant au moins des moyens de blocage (20) en rotation desdits éléments de fixation (16) et des moyens de maintien (21) desdits moyens de blocage (20) sur les éléments de fixation (16), lesdits moyens de blocage en rotation (20) étant constitués de pièces femelle (24) et d'au moins une paroi périphérique (26,26I,26E) contre laquelle lesdites pièces (24) butent en rotation, au moins une partie des éléments de fixation (16) recevant au moins une pièce femelle (24), les moyens de maintien (21) comprenant au moins une paroi supérieure (36) recouvrant les éléments de fixation (16) équipés des pièces femelle (24), et ladite paroi supérieure (36) bloquant, directement ou par l'intermédiaire d'une autre pièce, la translation desdites pièces femelle (24) le long des éléments de fixation (16), ledit dispositif (10) comprenant des moyens de solidarisation (22) à la roue (12), ladite solidarisation étant verrouillée mécaniquement, les moyens de solidarisation (22) comprenant au moins une paroi inférieure (58,58-1,58-2) maintenue contre la jante (18) par au moins un élément de fixation (16), ladite paroi inférieure (58,58-1,58-2) étant intercalée entre ledit élément (16) et la jante (18), ledit dispositif (10) étant **caractérisé en ce qu'**il comprend des moyens de verrouillage (62) mécaniques bloquant en rotation et en translation chaque élément de fixation (16) utilisé pour la réalisation des moyens de solidarisation (22) et maintenant ainsi chaque surface inférieure (58,58-1,58-2) contre la jante (18).

2. Dispositif de sécurité (10) pour une roue (12) d'un véhicule, notamment d'un véhicule de transport routier, selon la revendication 1, la paroi supérieure (36) et la ou les parois périphériques (26,26I,26E) faisant partie d'une même pièce, et chaque paroi inférieure (58,58-1,58-2) étant rapportée sous ladite paroi supérieure (36) par l'intermédiaire d'un support (64) de hauteur (H) adaptée, ledit dispositif (10) étant **caractérisé en ce que** les moyens de verrouillage (62) consistent en une pièce femelle (66) venant se loger autour de chaque élément de fixation (16) utilisé pour la réalisation des moyens de solidarisation (22) et bloquée en rotation dans ledit support (64), et en un anneau élastique (68) monté dans ledit support (64) et venant bloquer en translation ladite pièce femelle (66).

3. Dispositif de sécurité (10) pour une roue (12) d'un véhicule, notamment d'un véhicule de transport routier, selon la revendication 2, **caractérisé en ce que** chaque support (64) comporte au moins deux parois latérales (70-1,70-2) supportant ladite paroi inférieure (58,58-1,58-2) de part et d'autre de celle-ci et solidarisées à la paroi supérieure (36), lesdites parois latérales (70-1,70-2) comprenant une gorge intérieure (74) située à une hauteur (H1) adaptée pour la réception de l'anneau élastique (68) juste au-dessus de la pièce femelle (66), et **en ce que** ladite paroi supérieure (36) comprend une ouverture (76), de dimensions adaptées pour le passage des éléments à monter, située dans l'alignement de chaque support (64), ladite ouverture (76) pouvant être obturée par un capuchon détachable (40).

4. Dispositif de sécurité (10) pour une roue (12) d'un véhicule, notamment d'un véhicule de transport routier, selon la revendication 1, la ou les parois inférieure (58,58-1,58-2) et la ou les parois périphériques (26,26I,26E) faisant partie d'une même pièce, et la paroi supérieure (36) étant rapportée sur la ou les parois périphériques (26,26I,26E) par des moyens d'emboîtement (78), ledit dispositif (10) étant **caractérisé en ce que** les moyens de verrouillage (62) consistent en un dispositif de verrouillage (80) solidarisant ou désolidarisant ladite paroi supérieure (36) à ou aux parois inférieures (58,58-1,58-2) et/ou à ou aux parois périphériques (26,26I,26E).

5. Dispositif de sécurité (10) pour une roue (12) d'un véhicule, notamment d'un véhicule de transport routier, selon la revendication 4, **caractérisé en ce que** ledit dispositif de verrouillage (80) est actionné par une clé ou tout autre moyen analogue, et **en ce que** lesdits moyens d'emboîtement (78) prennent la forme de languettes (82) solidaires d'au moins une paroi périphérique (26,26I,26E) et s'étendant radialement par rapport à celle-ci, et d'encoches (84) de réception desdites languettes, lesdites encoches (84) étant réalisées dans un rebord (86) de la paroi supérieure (36).

6. Dispositif de sécurité (10) pour une roue (12) d'un véhicule, notamment d'un véhicule de transport routier, selon l'une des revendications 1 à 5, **caractérisé en ce qu'**il comprend des moyens d'amortissement (52) associés aux moyens de maintien (21) et intercalés entre la paroi supérieure (36) desdits moyens (21) et les pièces femelle (24) équipant les élément de fixation (16).

7. Dispositif de sécurité (10) pour une roue (12) d'un véhicule, notamment d'un véhicule de transport routier, selon la revendication 6, **caractérisé en ce que** lesdits moyens d'amortissement (52) prennent la forme d'au moins une pièce (54,54-1,54-2) en matériau souple comprimée entre la paroi supérieure (36) et chaque pièce femelle (24), et **en ce que** chaque pièce (54) comprend des ouvertures (55) au droit de chaque élément de fixation (16) équipé d'une pièce femelle (24).

8. Dispositif de sécurité (10) pour une roue (12) d'un véhicule, notamment d'un véhicule de transport routier, selon la revendication 6, **caractérisé en ce que** lesdits moyens d'amortissement (52) comprennent au moins une lame ressort (56) fixée sous la paroi supérieure (36) et appuyant sur chaque pièce femelle (24) des moyens de blocage (20).

## Patentansprüche

1. Sicherungsvorrichtung (10) für ein Rad (12) eines Fahrzeugs, insbesondere eines Straßentransportfahrzeuges, wobei durch die Vorrichtung (10) die Befestigungselemente (16) der Felge (18) des Rades (12) auf einer Nabe (14) sicherbar sind, und wobei die Vorrichtung (10) Blockiermittel (20) bezüglich der Drehung der Befestigungselemente (16) und Haltemittel (21) für die Blockiermittel (20) auf den Befestigungselementen (16) aufweist, wobei die Blockiermittel (20) für die Drehung aus weiblichen Stücken (24) und aus wenigstens einer äußeren Wand (26, 261, 26E) bestehen, gegen die diese Stücke (24) bei der Drehung stoßen, wobei wenigstens ein Teil der Befestigungselemente (16) wenigstens ein weibliches Stück (24) aufnimmt, die Haltemittel (21) wenigstens eine obere Wand (36) aufweisen, die die mit den weiblichen Stücken (24) versehenen Befestigungselemente (16) abdeckt, und die obere Wand (36) unmittelbar oder mittels eines anderen Stücks die Translation der weiblichen Stücke (24) entlang den Befestigungselementen (16) blockiert, wobei die Vorrichtung (10) Verbindungsmittel (22) mit dem Rad (12) aufweist, wobei diese Verbindung mechanisch verriegelbar ist und die Befestigungsmittel (22) wenigstens eine untere Wand (58, 58-1, 58-2) aufweisen, die durch wenigstens ein Befestigungselement (16) gegen die Felge (18) gehalten ist, wobei die untere Wand (58, 58-1, 58-2) zwischen diesem Element (16) und der Felge (18) eingebracht ist, wobei die Vorrichtung (10) **dadurch gekennzeichnet ist, dass** diese mechanische Verriegelungsmittel (62) aufweist, die die Drehung und Translation von jedem Befestigungselement (16) blockieren, das für die Bewerkstelligung der Verbindungsmittel (22) verwendet ist, und die auf diese Weise die untere Oberfläche (58, 58-1, 58-2) gegen die Felge (18) halten.

2. Sicherungsvorrichtung (10) für ein Rad (12) eines Fahrzeuges, insbesondere eines Straßentransportfahrzeuges, nach Anspruch 1, bei der die obere Wand (36) und die äußere Wand oder Wände (26, 261, 26E) einstückig ausgebildet sind und bei der jede untere Wand (58, 58-1, 58-2) mittels einer Halterung (64) einer geeigneten Höhe (H) an die obere Wand (36) angesetzt ist, wobei die Vorrichtung (10) **dadurch gekennzeichnet ist, dass** die Verriegelungsmittel (62) aus einem weiblichen Stück (66) bestehen, das um jedes für die Bewerkstelligung der Verbindungsmittel (22) verwendetes Befestigungselement (16) anordenbar ist, und dessen Drehung durch die Halterung (64) blockiert ist, und aus einem elastischen Ring (68) bestehen, der in der Halterung (64) montiert ist, und durch den die Translation des weiblichen Stücks (66) blockierbar ist.

3. Sicherungsvorrichtung (10) für ein Rad (12) eines Fahrzeuges, insbesondere eines Straßentransportfahrzeuges, nach Anspruch 2, **dadurch gekennzeichnet, dass** jede Halterung (64) wenigstens zwei seitliche Wände (70-1, 70-2) aufweist, die die untere Wand (58, 58-1, 58-2) auf beiden Seiten halten und mit der oberen Wand (36) verbinden, wobei die seitlichen Wände (70-1, 70-2) einen inneren Einzug (74) aufweisen, der auf einer Höhe (H1) angeordnet ist, die zur Aufnahme des elastischen Rings (68) unmittelbar oberhalb des weiblichen Stücks (66) geeignet ist, und dass die obere Wand (36) eine Öffnung (76) aufweist, deren Abmessungen ein Hindurchführen der zu montierenden Elemente gestattet und die auf die jeweilige Halterung (64) ausgerichtet ist, wobei die Öffnung (76) durch eine abnehmbare Kappe (40) verschließbar ist.

4. Sicherungsvorrichtung (10) für ein Rad (12) eines Fahrzeuges, insbesondere eines Straßentransportfahrzeuges, nach Anspruch 1, bei der die untere Wand oder die unteren Wände (58, 58-1, 58-2) und die äußere Wand oder die äußeren Wände (26, 26I, 26E) einstückig ausgebildet sind und bei der die obere Wand (36) mit der äußeren Wand oder den äußeren Wänden (26, 261, 26E) durch Einfassungsmittel (78) verbunden ist, wobei die Vorrichtung (10) **dadurch gekennzeichnet ist, dass** die Verriegelungsmittel (62) aus einer Verriegelungsvorrichtung (80) besteht, die die obere Wand (36) mit der unteren Wand oder den unteren Wänden (58, 58-1, 58-2) und/oder mit der äußeren Wand oder den äußeren Wänden (26, 261, 26E) verbindet oder davon trennt.

5. Sicherungsvorrichtung (10) für ein Rad (12) eines Fahrzeuges, insbesondere eines Straßentransportfahrzeuges, nach Anspruch 4, **dadurch gekennzeichnet, dass** die Verriegelungsvorrichtung (80) durch einen Schlüssel oder ein entsprechendes anderes Mittel betätigt ist und dass die Einfassungsmittel (78) als Vorsprünge (82) ausgebildet sind, die mit der wenigstens einer äußeren Wand (26, 261, 26E) verbunden sind und sich bezüglich dieser in radialer Richtung erstrecken, und als Ausnehmungen (84) zur Aufnahme der Vorsprünge ausgebildet sind, wobei die Ausnehmungen (84) an einem Rand (86) der oberen Wand (36) ausgebildet sind.

6. Sicherungsvorrichtung (10) für ein Rad (12) eines Fahrzeuges, insbesondere eines Straßentransportfahrzeuges, nach einem der Ansprüche 1 bis 5, **dadurch gekennzeichnet, dass** diese Dämpfungsmittel (52) aufweist, die den Haltemittel (21) zugeordnet sind und zwischen die obere Wand (36) dieser Mittel (21) und den weiblichen Stücken (24) angeordnet sind, mit denen die Befestigungsmittel (16) versehen sind.

7. Sicherungsvorrichtung (10) für ein Rad (12) eines Fahrzeuges, insbesondere eines Straßentransportfahrzeuges, nach Anspruch 6, **dadurch gekennzeichnet, dass** die Dämpfungsmittel (52) als wenigstens ein Stück (54, 54-1, 54-2) aus weichem Material ausgestaltet sind, das zwischen der oberen Wand (36) und jedem weiblichen Stück (24) zusammengedrückt ist, und dass jedes Stück (54) Öffnungen (55) gegenüber jedem mit einem weiblichen Stück (24) versehenen Befestigungselement (16) aufweist.

8. Sicherungsvorrichtung (10) für ein Rad (12) eines Fahrzeuges, insbesondere eines Straßentransportfahrzeuges, nach Anspruch 6, **dadurch gekennzeichnet, dass** die Dämpfungsmittel (52) wenigstens eine Blattfeder (56) aufweisen, die an der oberen Wand (36) angebracht ist und auf jedes weibliche Stück (24) der Blockiermittel (20) drückt.

## Claims

1. Safety device (10) for a wheel (12) of a vehicle, in particular a road transport vehicle, with said device (10) securing the attachment elements (16) of the rim (18) of said wheel (12) on a hub (14), said device (10) comprising at least means (20) for locking in rotation said attachment elements (16) and means (21) for holding said locking means (20) on the attachment elements (16), with said means (20) for locking in rotation consisting of female parts (24) and at least one peripheral wall (26, 26I, 26E) against which said parts (24) abut in rotation, with at least one portion of the attachment elements (16) accommodating at least one female part (24), the holding means (21) comprising at least one upper wall (36) covering the attachment elements (16) that are equipped with female parts (24), and said upper wall (36) blocking, directly or by means of another part, the translational movement of said female parts (24) along the attachment elements (16), with said device (10) comprising means (22) for engagement with the wheel (12) ,that said engagement being locked mechanically, the engagement means (22) comprising at least one lower wall (58, 58-1, 58-2) held against the rim (18) by at least one attachment element (16), with said lower wall (58, 58-1, 58-2) being inserted between said element (16) and the rim (18), said device (10) being **characterized in that** it comprises mechanical locking means (62) locking in rotation and in translational movement each attachment element (16) that is used for the creation of engagement means (22) and thus holding each lower surface (58, 58-1, 58-2) against the rim (18).

2. Safety device (10) for a wheel (12) of vehicle, in particular a road transport vehicle, according to Claim 1, with the upper wall (36) and the peripheral wall(s) (26, 26I, 26E) being part of the same part, and with each lower wall (58, 58-1, 58-2) being connected under said upper wall (36) by means of a support (64) of a suitable height (H), said device (10) being **characterized in that** the locking means (62) consist of a female part (66) that is housed around each attachment element (16) used for the creation of engagement means (22) and locked in rotation in said support (64), and of an elastic ring (68) that is mounted in said support (64) and locking said female part (66) in translational movement.

3. Safety device (10) for a wheel (12) of a vehicle, in particular a road transport vehicle, according to Claim 2, wherein each support (64) comprises at least two side walls (70-1, 70-2) supporting said lower wall (58, 58-1, 58-2) on both sides of the latter and made integral with the upper wall (36), with said side walls (70-1, 70-2) comprising an inside groove (74) located at a height (H1) that is suitable for accommodating the elastic ring (68) just above the female part (66), and wherein said upper wall (36) comprises an opening (76), with dimensions that are suitable for the passage of elements to be mounted, located in the alignment of each support (64), with said opening (76) being able to be sealed by a detachable cap (40).

4. Safety device (10) for a wheel (12) of a vehicle, in particular a road transport vehicle, according to Claim 1, with the lower wall(s) (58, 58-1, 58-2) and the peripheral wall(s) (26, 26I, 26E) being part of the same part, and the upper wall (36) being connected to the peripheral wall(s) (26, 26I, 26E) by interlocking means (78), with said device (10) being **characterized in that** the locking means (62) consist of a locking device (80) attaching or detaching said upper wall (36) to or from lower wall(s) (58, 58-1, 58-2) and/or to or from peripheral wall(s) (26, 26I, 26E).

5. Safety device (10) for a wheel (12) of a vehicle, in particular a road transport vehicle, according to Claim 4, wherein said locking device (80) is actuated by a key or any other analogous means, and wherein said interlocking means (78) take the shape of tabs (82) that are integral with at least one peripheral wall (26, 26I, 26E) and that extend radially relative to the latter, and slots (84) for receiving said tabs, said slots (84) being made in a flange (86) of the upper wall (36).

6. Safety device (10) for a wheel (12) of a vehicle, in particular a road transport vehicle, according to one of Claims 1 to 5, wherein it comprises damping means (52) combined with holding means (21) and inserted between the upper wall (36) of said means (21) and the female parts (24) equipping the attachment elements (16).

7. Safety device (10) for a wheel (12) of a vehicle, in particular a road transport vehicle, according to Claim 6, wherein said damping means (52) take the shape of at least one part (54, 54-1, 54-2) made of flexible material that is compressed between the upper wall (36) and each female part (24), and wherein each part (54) comprises openings (55) to the right of each attachment element (16) that is equipped with a female part (24).

8. Safety device (10) for a wheel (12) of a vehicle, in particular a road transport vehicle, according to Claim 6, wherein said damping means (52) comprise at least one leaf spring (56) that is attached under the upper wall (36) and that rests on each female part (24) of the locking means (20).
